(19)

Europäisches
Patentamt
European
Patent Office
Office européen
des brevets

(11) **EP 1 972 960 A1**

(12) **EUROPEAN PATENT APPLICATION**

(43) Date of publication:
**24.09.2008 Bulletin 2008/39**

(51) Int Cl.:
***G01S 7/40*** *(2006.01)*   ***G01S 7/497*** *(2006.01)*
***G01S 17/42*** *(2006.01)*   ***G01S 17/93*** *(2006.01)*

(21) Application number: **07119911.1**

(22) Date of filing: **02.11.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **22.03.2007 JP 2007074112**

(71) Applicant: **OMRON CORPORATION
Kyoto-shi, Kyoto 600-8530 (JP)**

(72) Inventors:
• **Matsuura, Yoshio
c/o Omron Corporation
Kyoto-shi Kyoto 600-8530 (JP)**
• **Itao, Daisuke
c/o Omron Corporation
Kyoto-shi Kyoto 600-8530 (JP)**

(74) Representative: **Wilhelms · Kilian & Partner
Patentanwälte
Eduard-Schmid-Strasse 2
81541 München (DE)**

(54) **Object detector and method of adjusting irradiation axis therefor**

(57) An object detector moves projected search wave in a selected direction and detects position of an object in front by receiving reflected wave from it. An adjustment member having a flat surface is placed in front and its surface is scanned in the selected direction by the search wave and a change in intensity of the reflected wave is obtained. The apparent irradiation direction of the search wave in the selected direction is adjusted to the real irradiation direction based on this change in intensity.

EP 1 972 960 A1

## Description

Background of the Invention

This invention relates to an object detector for detecting the position of an object by using electromagnetic waves such as laser light as a search wave and a method of adjusting the irradiation axis of the search wave for such an object detector.

So-called radar devices have been known, serving as an object detector for detecting an object in front of a vehicle for the purpose of traffic safety. Such an object detector makes use of electromagnetic waves such as laser light as a search wave, scanning a preliminarily specified search area with this search wave to detect an object that may be present in this search area. Explained more in detail, the preliminarily specified search area is irradiated with the search wave and the time required for a reflected wave to be received is measured to obtain the distance to the object that reflected the search wave. At the same time, the direction of the object is obtained from the direction in which the search wave was projected. In other words, the object detector repeats the process of obtaining the distance and direction of the object while scanning the search area by changing the direction of projection of the search wave and obtains the relative position of each object in the search area with respect to the vehicle. The changes in the direction and distance to each object are also detected with respect to time, and the speed and the direction of travel of the vehicle are taken into consideration to calculate the velocity of each object and to judge whether it is an stationary object or in motion. On the basis of the results of detection by the object detector, a control such as cruising control with respect to a front going vehicle may be carried out on the side of the vehicle.

The accuracy in detection by the object detector becomes poorer if the difference between the apparent direction of projection of the search wave recognized as such on the side of the main body of the vehicle (hereinafter referred to as the apparent direction) and the direction in which the search wave is actually being projected (hereinafter referred to as the real direction) becomes large. Thus, it is necessary to match the apparent direction and the real direction in order to maintain the detection accuracy by the object detector. For this reason, a correction process is carried out on production lines and repair factories of vehicles in order to adjust the irradiation axis of each object detector. Japanese Patent Publications Tokkai 2000-75031, 2003-14846 and 11-38123, for example, describe methods of such correction process.

According to the method of Japanese Patent Publication Tokkai 2000-75031, a reflective plate having a specified reflection pattern is placed opposite and in front of the object detector attached to a vehicle, and the direction of projection of the search wave is varied. The direction of projection for receiving reflected wave corresponding to this specified pattern is detected, and the apparent direction at this moment is adjusted by software to be the front direction of the main body. In other words, it is a method of software adjustment of the apparent direction with respect to the real direction.

According to Japanese Patent Publications Tokkai 2003-14846 and 11-38123, a CCD camera is placed opposite and in front of the object detector attached to a vehicle and the irradiated position by the search wave (laser light) is displayed on a monitor. The search wave is projected with the apparent direction as the front of the main body, and the user adjusts the actual position of irradiation by the search wave with an appropriate position while watching the position of irradiation. In other words, they are hardware methods of adjusting the real direction with respect to the apparent direction.

The position of the reflective plate used for the adjustment varies, however, depending on, for example, the position where the object detector is attached to the vehicle. Thus, when the irradiation axis is adjusted, the user must check whether the reflective plate and its position are appropriate in view of the position of the object detector on the vehicle and, if not, change the plate and/or its position. In other words, it is a cumbersome work to prepare the environment for the adjustment and the work efficiency is poor. In the case of a production line for producing vehicles having object detectors attached at individually different positions, in particular, the reflective plates and their positions must be changed frequently, and the possibility of using a wrong kind of plate or placing a plate at a wrong position, resulting in incorrect adjustment, becomes higher.

Summary of the Invention

It is therefore an object of this invention in view of the problem described above to provide an object detector of which the axis of irradiation can be adjusted by using a component for adjustment having a reflective surface at the same position, independent of the position of attachment of its main body.

It is another object of this invention to provide a method of adjusting the irradiation axis by using such a component, independent of the kind of the object detector or the position at which it is attached.

In view of the objects as described above, the invention provides an object detector with scanning means for moving a search wave projected by wave projecting means in a certain selected direction, which may be a horizontal direction. Wave receiving means is also provided for receiving reflected wave of this search wave from an object, and position detecting means serves to detect position of the object from time interval from when the search wave is projected by the wave projecting means until when the reflected wave is received by the wave receiving means and the irradiation direction of the search wave determined by the scanning means (herein referred to as the apparent irradiation direction or the apparent direction of irradiation as recognized by the object detector).

The irradiation axis, or the direction of irradiation, is adjusted as follows by using an adjustment member having a flat surface that is set so as to face the wave projecting means. Measuring means causes the scanning means to scan this flat surface in the selected direction with the search wave and thereby obtains a change in intensity of the reflected wave in the selected direction by the wave receiving means. Adjusting means adjusts this apparent irradiation direction of the search wave in the selected direction to the real irradiation direction of the search wave from the wave projecting means based on the change in intensity obtained by the measuring means.

The aforementioned adjustment member may be a flat plate or any structure with a certain finite thickness. It may even be a thin sheet-like structure if provided with a proper support. The measuring means serves to scan a predetermined scan area with the search wave. The adjustment member is only required to have a flat reflective surface large enough to include the range illuminated by the search wave. The reflective surface of the flat plate has only to be uniform in reflectivity, and a high reflectivity is desirable. The quantity of reflected wave is the largest where the reflective surface is perpendicular to the direction of irradiation of the search wave and decreases as the displacement from this point increases. Thus, if the reflective surface of this adjustment member faces the front of the wave projecting means, the direction of irradiation of the search wave where the quantity of reflected light is the largest becomes the frontal direction of the wave projecting means. Thus, if the irradiation direction of the search wave where the maximum quantity of reflected light is obtained as a scan is made in the selected direction is adjusted to be the front surface of the wave projecting means, the apparent irradiation direction recognized as such by the object detector is adjusted in the selected direction to the real irradiation direction of the search wave actually projected from the wave projecting means. In other words, the adjustment process can be carried out by using an adjustment member set at the same position independent of the position where the main body of the detector is set and hence the work efficiency is significantly improved.

The scanning means may be adapted to moves the search wave in another direction that is perpendicular to the selected direction such that a change in intensity of the reflected wave can be obtained and the irradiation direction can be adjusted also in this perpendicular direction. In this case, the adjustment of the apparent irradiation direction to the real irradiation direction can be carried out along two directions such as both in horizontal and vertical directions.

The adjusting means may be adapted to adjust the irradiation direction by using a predetermined offset angle. With an object detector of this kind, the adjustment of the apparent irradiation direction to the real irradiation direction can be effected according to the position of the main body of the detector on the vehicle.

The adjustment member may be of a kind provided with displacement detecting means for detecting a displacement value between the actual position of the adjustment member and its proper position such that the adjusting means adjusts the irradiation direction by using this displacement value. With an object detector of this kind, the adjustment can be effected by taking into consideration the displacement of the adjustment member from its intended proper position.

The object detector of this invention may further comprise adjustment stopping means for stopping adjustment of the irradiation direction if the displacement value exceeds a certain predetermined range. In this manner, it can be prevented from carrying out an inadequate adjustment process uselessly.

Alternatively, adjustment stopping means may be provided for stopping adjustment of the irradiation direction if the position detecting means detects end positions of the adjustment members in the selected direction and if displacement values of the end positions from predetermined correct end positions of the adjustment members exceed a certain predetermined range.

The present invention has the merit of improving the work efficiency significantly because the adjustment of the irradiation axis can be effected by using an adjustment member with a flat surface that is placed at the same fixed position, independent of the position of attaching the main body.

Brief Description of the Drawings

Fig. 1 is a block diagram of the principal structure of a radar device embodying this invention.
Figs. 2, 3 and 4 are drawings for explaining the object detecting process by the radar device of Fig. 1.
Figs. 5 and 6 are drawings for explaining the process of adjusting the direction of irradiation.
Fig. 7 is a flowchart that shows the process for the adjustment of the irradiation axis.
Fig. 8 is a drawing that shows an example of change in the intensity of the reflected wave of the laser light against the apparent direction.
Figs. 9 and 10 are drawings for explaining the process of adjusting the direction of irradiation by using a displacement detector.
Fig. 11 is a flowchart of a process for the adjustment of the irradiation axis by using a displacement detector using a flat plate.
Fig. 12 is a flowchart of another process for the adjustment of the irradiation axis.
Fig. 13 is a drawing for explaining the step of detecting the slope of the flat plate in the horizontal direction in the process of Fig. 12.

Detailed Description of the Invention

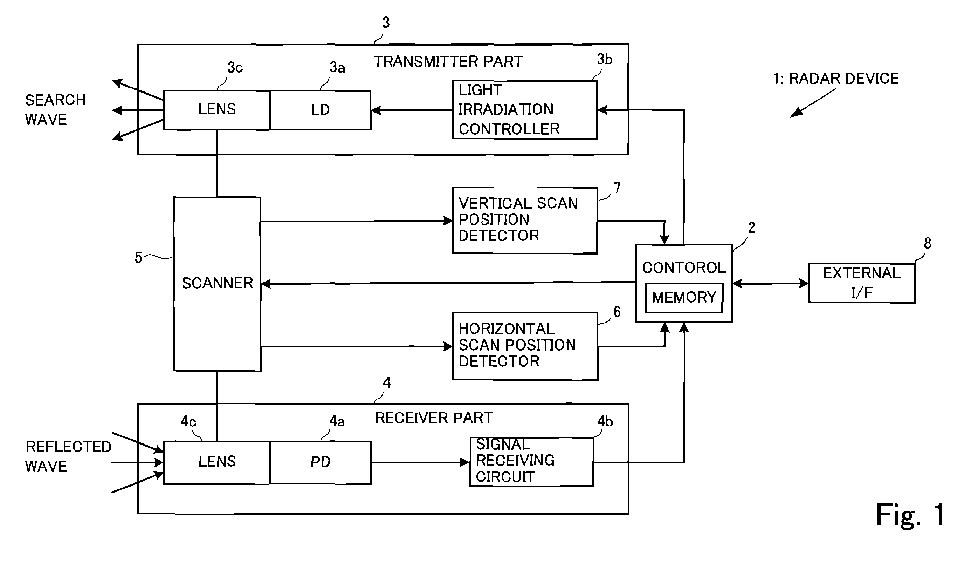

The invention is described next with reference to an embodiment. Fig. 1 is a block diagram that shows principal structure of a radar device 1 embodying this invention, provided with a control part 2, a transmitter part 3, a receiver part 4, a scanner part 5 and a horizontal scan position detector 6, a vertical scan position detector 7 and an external interface (hereinafter referred to as the external I/F) 8. The control part 2 controls the operations of each component of the main body, having a memory 2a that stores programs for the object detection process and irradiation axis adjusting process to be described below and parameters to be used at the time of the operation. The transmitter part 3 is provided with a laser diode (hereinafter referred to as the LD) 3a serving as the light emitting element, a light emission controller 3b for controlling the light emission from the LD 3a and a light projecting lens 3c placed opposite to the light emitting surface of the LD 3a. The receiver part 4 is provided with a photodiode (hereinafter referred to as the PD) 4a serving as the light receiving element, a signal receiving circuit 4b for processing output signals from the PD 4a and a light receiving lens 4c placed opposite to the light receiving surface of the PD 4a. The scanner part 5 serves to move the light projecting lens 3c parallel to the light emitting surface of the LD 3a and to thereby change the irradiation direction of the laser light from the LD 3a. It also serves to move the light receiving lens 4c parallel to the light receiving surface of the PD 4a in synchronism with the motion of the light projecting lens 3c so as to focus the reflected laser light from the LD 3a on the light receiving surface of the PD 4a. The light projecting lens 3c is moved both horizontally and vertically by the scanner part 5 such that the detection area is scanned horizontally and vertically, respectively. The light receiving lens 4c is also moved horizontally and vertically in synchronism with the light projecting lens 3c. The horizontal scan position detector 6 obtains the horizontal position of the light projecting lens 3c from the scanner part 5 and inputs it to the control part 2. The vertical scan position detector 7 obtains the vertical position of the light projecting lens 3c from the scanner part 5 and inputs it to the control part. The control part 2 detects the irradiation angles in the horizontal and vertical direction of the laser light from the LD 3D respectively from the horizontal and vertical positions of the light projecting lens 3c inputted from the horizontal and vertical scan position detectors 6 and 7. The external I/F 8 serves to control the input to and output from external apparatus.

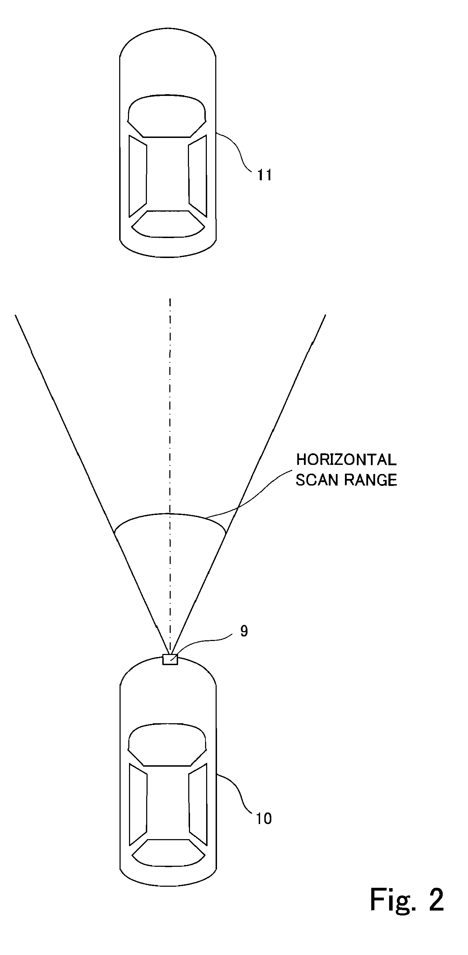

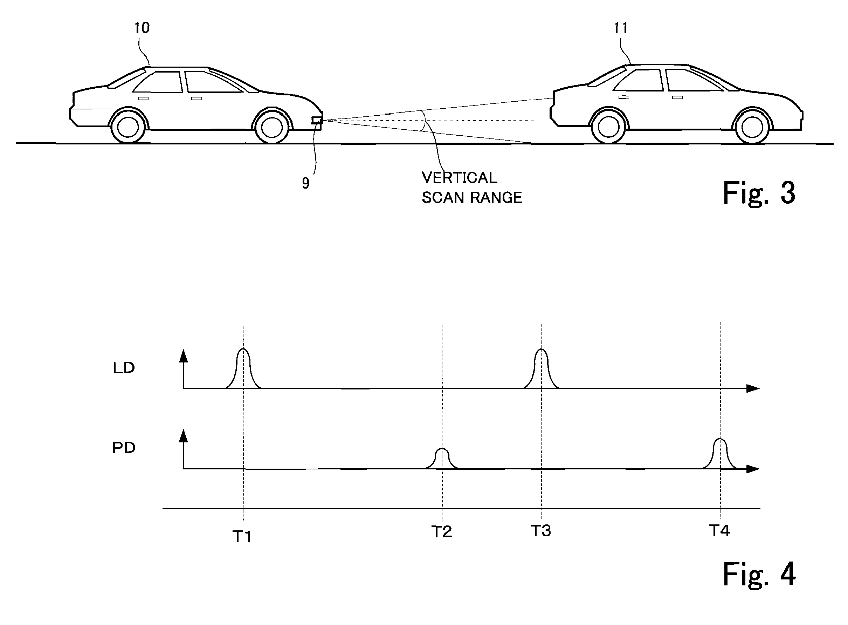

Next, the object detection process of the radar device 1 is explained briefly with reference to Figs. 2 and 3. The radar device 1 stores in its memory 2a a program for executing this object detection process, and data such as the vehicle speed are inputted from the vehicle to the control part 2 through the external I/F 8. A detector head (main body) 9 incorporating the LD 3a, the light projecting lens 3c, the PD 4a, the light receiving lens 4c and the scanner part 5 is attached to the front surface of a vehicle (one's own vehicle) 10. Numeral 11 indicates a front going vehicle which is traveling in front of the own vehicle 10. The radar device 1 is adapted to scan a horizontal target area (scan range) shown in Fig. 2 by moving the laser light from the LD 3a. Explained more in detail, the light projecting lens 3c is moved horizontally to move the laser light horizontally. The scanner part 5 also serves to move the laser light vertically to scan a vertical scan area as shown in Fig. 3 within a vertical scan range. The control part 2 detects the irradiation angles (both horizontal and vertical directions) of the laser light from the LD 3a from the horizontal and vertical positions of the light projecting lens 3c inputted from the horizontal and vertical scan position detector parts 6 and 7.

In the above, the irradiation angles of the laser light detected by the radar device 1 are those of the laser light recognized internally by the main body (or the apparent directions), and they are not the directions of the actual irradiation with reference to the vehicle 10 (or the real directions). In order to maintain the accuracy in the object detection, the radar device 1 is provided with an irradiation axis adjusting function for matching the apparent direction and the real directions, as will be described in detail below.

The radar device 1 changes the irradiation direction by the laser light within the horizontal scan range of Fig. 2 and the vertical scan range of Fig. 3 by causing the scanner part 5 to horizontally and vertically move the light projecting lens 3c parallel to and perpendicularly to the light emitting surface of the LD 3a, respectively. In synchronism with the motion of the light projecting lens 3c, the scanner part 5 also moves the light receiving lens 4c such that the reflected light of the laser light from the LD 3a is converged on the light receiving surface of the PD 4a. The light emission controller 3b controls the LD 3a according to commands from the control part 2 and projects laser light at predetermined time intervals as shown in Fig. 4. The signal receiving circuit 4b processes the output signal from the PD 4a and inputs the level of the quantity of received light by the PD 4a into the control part 2. The quantity of light received by the PD 4a increases as shown in Fig. 4 when the reflected light of the laser light projected from the LD 3a is received.

Based on the interval between time T1 (or T3) when the LD 3a emitted laser light and time T2 (or T4) when the PD 4a received the reflected light of the laser light from the LD 3a, the control part 2 calculates the distance L to the object that reflected the laser light emitted from the LD 3a according to the following formula:

$$L = c(T2 - T1)/2$$

where c is the speed of propagation of the laser light. The control part 2 also detects the relative position of the object with respect to the own vehicle 10 from the irradiation angles in the horizontal and vertical directions of the laser light from the LD 3a obtained from the horizontal and vertical scan position detector parts 6 and 7. The radar device 1 repeats this detection process by scanning the detection area with the laser light of the LD 3a so as to detect the relative position of each of the objects that may be present in the detection area. For each of the objects thus detected, the radar device 1 reports its position through the external I/F 8 to a control device (not shown) on the side of the vehicle 10. The control device on the vehicle may carry out a cruise control or the like, based on such report from the radar device 1, to follow the front going vehicle 11.

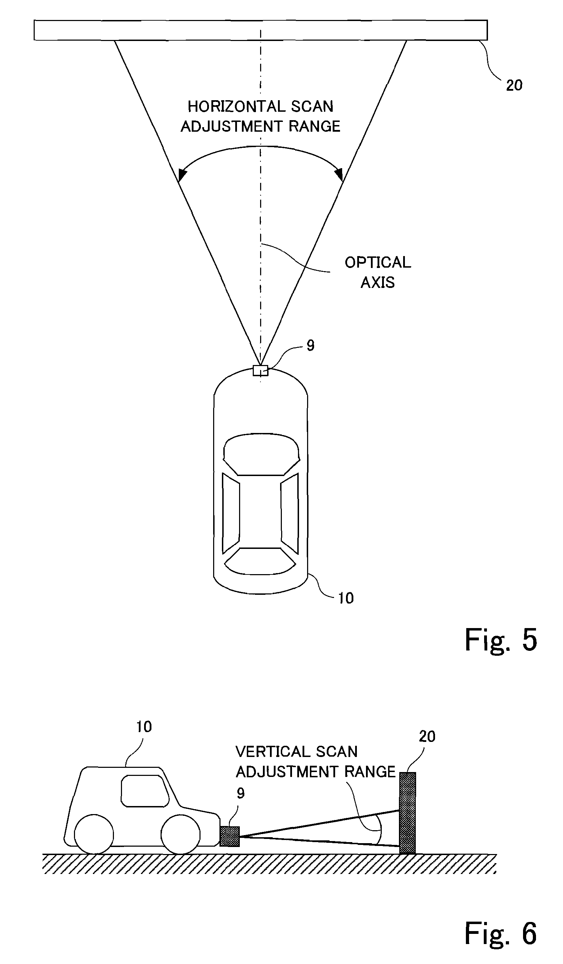

Next, the irradiation axis adjustment process for securing the accuracy of detecting objects by the radar device 1 is explained. This is a process for matching the apparent direction and the real direction of the radar device 1 and is carried out while the radar device 1 is in the condition of being attached to the vehicle 10. The detection head 9 is attached to the vehicle 10 such that the directions of its scan along the two axes are horizontal and vertical. When the adjustment process is carried out, a flat plate 20 (serving as the component for adjustment) is placed in front as shown in Figs. 5 and 6. The radar device 1 moves the laser light both horizontally and vertically and matches the apparent and real directions based on the changes in the intensity of the reflected wave from the flat plate 20. Explained more in detail, the process for matching the front surface of the apparent horizontal direction with the direction where the intensity of the reflected wave from the flat plate 20 becomes a maximum as the laser light is moved horizontally within the horizontal scan range and the process for matching the front surface of the apparent vertical direction with the direction where the intensity of the reflected wave from the flat plate 20 becomes a maximum as the laser light is moved vertically within the vertical scan range while the detection head 9 is in the condition of being attached to the vehicle 10 are carried out by software.

The horizontal length of this flat plate is so as to include the range illuminated by the laser light moved horizontally by the radar device 1 within the horizontal scan range, and its vertical height is so as to include the range illuminated by the laser light moved vertically by radar device 1 within the vertical scan range. The regular reflection characteristic of the surface of the flat plate 20 is uniform over the area where the laser light is illuminated. It is preferable to use an ABS resin plate or an acryl plate with relatively large transmissivity as the flat plate 20. The range of the scan for adjustment may be of the same size as the detection range or may be different. A narrower range of scan for adjustment is advantageous because the flat plate 20 may be made smaller.

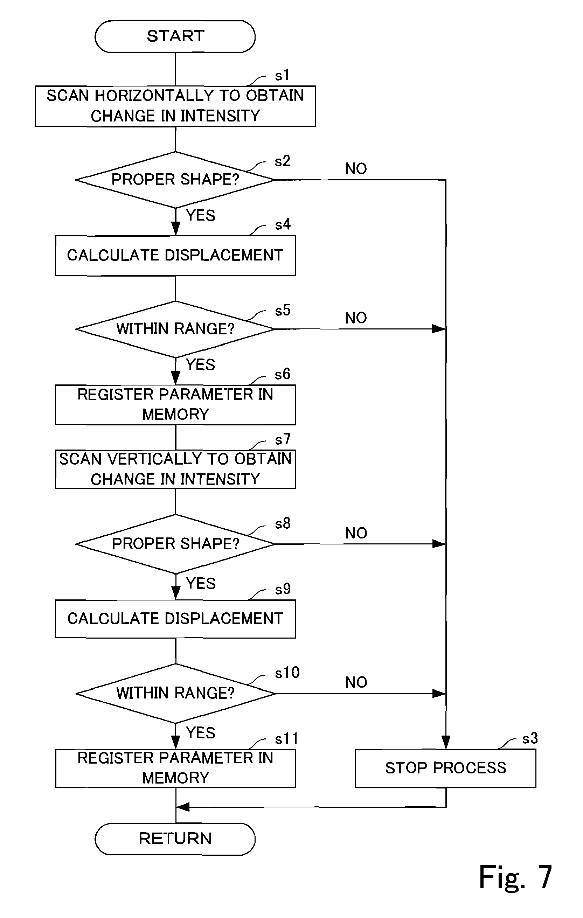

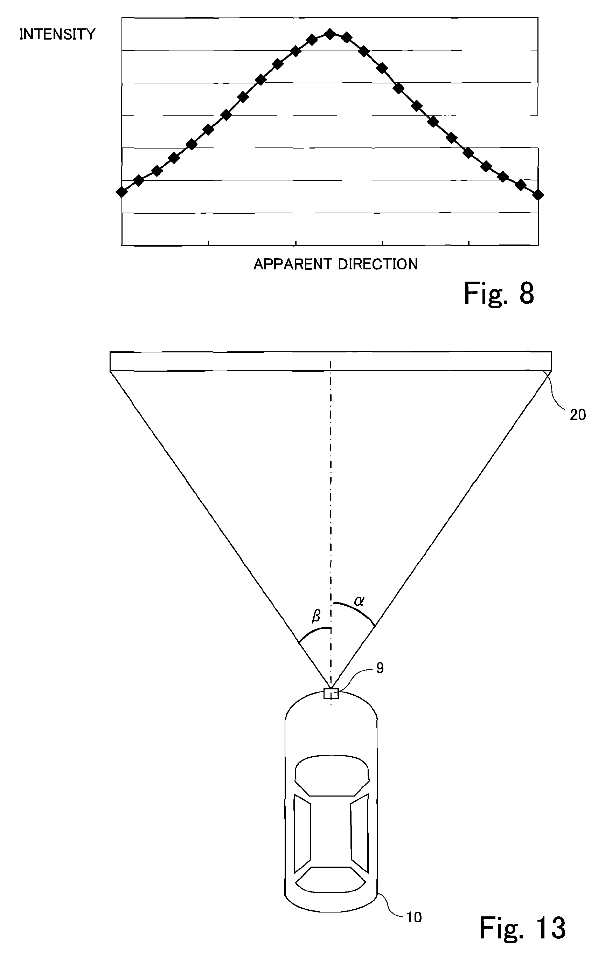

Fig. 7 is a flowchart that shows the process for the adjustment of the irradiation axis. The radar device 1 moves the laser light horizontally and obtains the changes in the intensity of the reflected wave of the laser light in the apparent direction (Step s1). During this step, the irradiation angle of the laser light in the vertical direction remains fixed. The scanner part 5 moves the light projecting lens 3c horizontally for each of a plurality of projection angles to match the apparent direction, and the light emission controller 3b causes the laser light to be emitted from the LD 3a. The reflected wave from the flat plate 20 is received by the PD 4a, and this process is repeated. The quantity of received light increases (or the intensity of the reflected wave becomes greater) as the plane of reflection becomes closer to be perpendicular to the direction of irradiation by the laser light. Fig. 8 shows an example of change in the intensity of the reflected wave of the laser light against the apparent direction.

The radar device 1 judges whether the shape of the change in the intensity of the reflected wave of the laser light against the apparent direction obtained in Step s1 is proper or not (Step s2). This is done by comparing the shape obtained in Step s1 with a proper shape of the change in the intensity of reflected wave against the preliminarily determined real direction and judging whether the intensity, the shape of the intensity distribution and the (left-right) symmetry characteristic of the intensity distribution of the reflected wave are appropriate or not. More specifically, it is judged whether the adjustment of the irradiation axis is being carried out under proper conditions such as whether the surface of the flat plate 20 is dirty or not and whether the positional relationship between the flat plate 20 and the vehicle 10 is appropriate or not.

If it is judged that the shape is not proper (NO in Step s2), the current adjustment process is terminated (Step s3) and the current operation is stopped such that the adjustment process is prevented from continuing under this inadequate condition. The fact that the adjustment process cannot be properly carried may also be reported through the external I/F 8.

If the shape is judged to be proper (YES in Step s2), the radar device 1 calculates the displacement (in the horizontal direction) between the apparent and real directions (Step s4). The irradiation angle of the apparent direction when the intensity of the reflected wave of the laser light obtained in Step s1 was a maximum is calculated as the displacement from the real direction. The radar device 1 judges whether or not the displacement value obtained in Step s4 is within a predefined range (Step s5). This is to determine whether the error in the assembly of the radar device 1 and the error in its attachment to the vehicle 10 is within an appropriate range or not. If it is determined that the displacement value is not within the predetermined range (NO in Step s5), the current process is terminated (Step s3). If the displacement value is found to be within this range (YES in Step s5), the parameter for horizontally displacing the apparent direction is registered in the memory 2a (Step s6).

On the basis of the horizontal displacement value between the apparent and real directions, the radar device moves the apparent direction by software by this displacement value such that the apparent direction in the horizontal direction can be matched to the real direction.

Next, the radar device 1 moves the laser light in the vertical direction to obtain the intensity variations of the reflected wave of the laser light in the apparent direction (Step s7). In this case, the irradiation angle of the laser light in the horizontal direction is fixed on the front surface of the main body. Step s7 of this routine is essentially the same as Step s 1 described above except for the direction. Thus, it is judged next whether or not the shape of the intensity variations of the reflected wave of the laser light in the apparent direction obtained is proper (Step s8). Step s8 is essentially the same as Step s2, and it is determined whether or not the surface of the flat plate 20 is dirty and whether or not the positional relationship between the flat plate 20 and the vehicle 10 is proper If the shape is determined not to be proper (NO in Step s8), the adjustment process is terminated (Step s3) and the current operation is stopped such that the adjustment process is prevented from continuing under this inadequate condition.

If the shape is judged to be proper (YES in Step s8), the radar device 1 calculates the displacement (in the vertical direction) between the apparent and real directions (Step s9). The irradiation angle of the apparent direction when the intensity of the reflected wave of the laser light obtained in Step s8 was a maximum is calculated as the displacement from the real direction. The radar device 1 judges whether or not the displacement value obtained in Step s9 is within a predefined range (Step s 10). This is to determine whether the error in the assembly of the radar device 1 and the error in its attachment to the vehicle 10 is within an appropriate range or not. If it is determined that the displacement value is not within the predetermined range (NO in Step s 10), the current process is terminated (Step s3). If the displacement value is found to be within this range (YES in Step s10), the parameter for vertically displacing the apparent direction is registered in the memory 2a (Step s11).

According to this adjustment method, the flat plate 20 with the characteristic of regular reflection is employed to adjust the apparent horizontal direction to the real direction based on the intensity distribution of reflected wave as the laser light is horizontally moved for a scan. Thus, there is no need to vary the kind of the flat plate 20 to be employed or its position, depending on the type of the main body of the radar device 1 or the kind of the vehicle to which the radar device 1 is attached. In the vertical direction, too, the apparent direction can be matched to the real direction without changing the flat plate 20, depending on the type of the main body of the radar device 1 or the kind of the vehicle to which the radar device 1 is attached. In other words, the adjustment of the irradiation axis can be effected under the same condition independent of the kind of the vehicle to which the main body is attached. Thus, the work for the adjustment is simplified and the work efficiency is improved.

Since it is judged whether the intensity distribution of reflected wave obtained when the laser light is moved horizontally and vertically for a scan is properly shaped or not and the process is stopped if the shape of the distribution is found to be not proper, it is possible to prevent the process from being carried out under an improper condition.

Although an example was explained above for a situation where the apparent direction is matched to the real direction both in the horizontal and vertical directions, the radar device 1 may be of the type of adjusting the apparent direction to the real direction only along one axis. In such a case, the process described above is carried out only along this single axis.

If the detection head 9 is not at the center in front of the vehicle 10 but is installed on the right-hand or left-hand side, the offset angle corresponding to the position of installation may be preliminarily registered in the memory 2a such that the displacement value to be used in Steps s6 and s 11 may be changed by a quantity corresponding to this offset angle. This is based on knowledge derived from experience that when the detection head 9 is set at a low position after the adjustment of the irradiation axis, the ability to detect a front going vehicle can be improved by setting the detection head 9 to be pointing somewhat upward if it is nearly at the center in front and by directing somewhat towards the center if it is attached near the right-hand or left-hand edge.

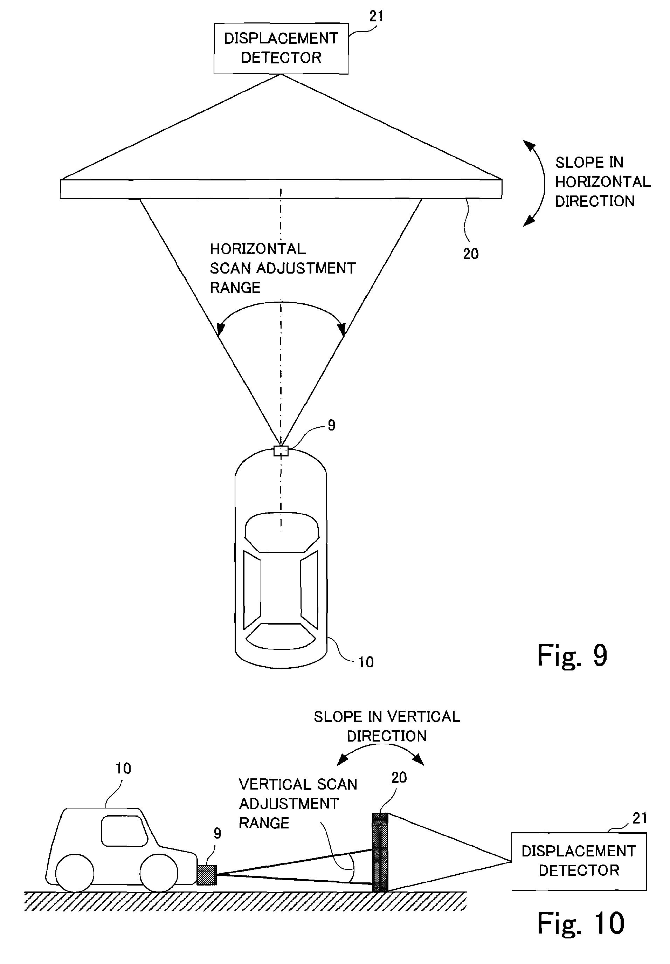

Alternatively, as shown in Figs. 9 and 10, a displacement detector 21 may be used for detecting the position of the flat plate 20 in order to adjust the irradiation axis. This displacement detector 21 is adapted to detect the displacement between the actual position of the flat plate 20 and its proper position and to thereby calculate its slopes in the horizontal and vertical directions. The slopes of the flat plate 20 thus calculated are inputted to the radar device 1.

For example, the displacement detector 21 may function to detect the displacement of each of three corner points of the flat plate 20 from their proper positions by using laser light as done by the radar device 1 to detect the actual positions of the three corner points. It is assumed that the irradiation axis of the displacement detector 21 is already properly adjusted and that the displacement detector 21 is placed at a fixed position. The slope of the flat plate 20 in the horizontal direction is calculated based on the displacements of two horizontally arranged corner points from their proper positions. The slope of the flat plate 20 in the vertical direction is similarly calculated based on the displacements of two vertically arranged corner points from their proper positions.

The displacement detector 21 may alternatively be provided with sensors for detecting the individual positions of the three corner points of the flat plate 20. For example, a photoelectric light-reflecting sensor may be provided at each of the three corner points of the flat plate 20 such that each of these sensors detects the distance to the corresponding corner point based on the time between the emission of light and its reception. In this case, the displacement detector 21 calculates the slopes of the flat plate 20 in the horizontal and vertical directions based on the differences between the distances to the three sensors thus measured and the proper distances to these corner points that are preliminarily determined.

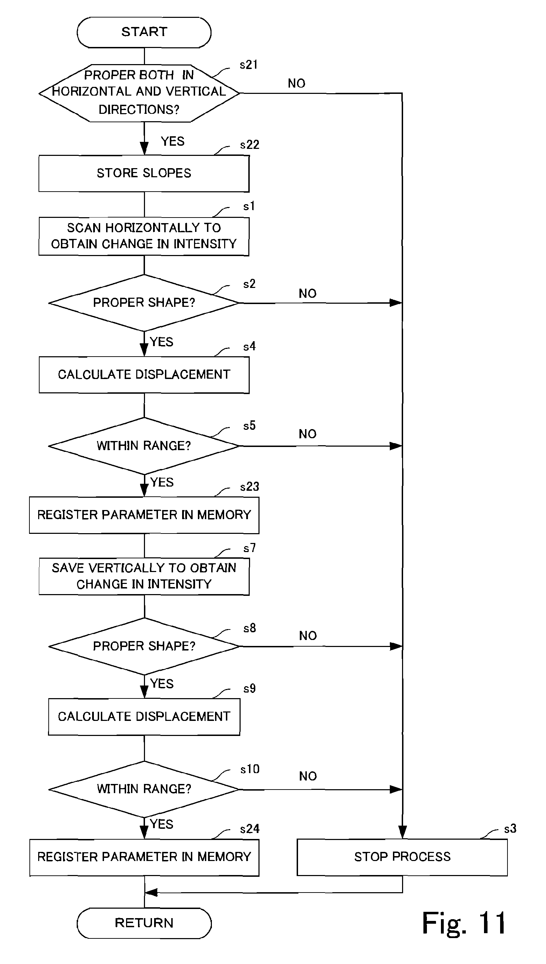

Fig. 11 is a flowchart of the process for the adjustment of the irradiation axis by using the displacement detector 21 using the flat plate 20. After the slopes of the flat plate 20 in the horizontal and vertical directions calculated by the displacement detector 21 as explained above are inputted to the radar device 1 through the external I/F 8, it is determined whether or not these slopes are both within a preliminarily determined allowable range (Step s21). If the slope in either of the directions is not within the allowable range (NO in step s21), it is judged that the flat plate 20 is not positioned correctly and the determination routine is stopped (Step s3) without the adjustment process being carried out. At the same time, a report to this effect may be outputted.

If the slopes of the flat plate 20 in the horizontal and vertical directions are both within the allowable range (YES in Step s21), these slopes are stored in the memory 2a (Step s22), and the radar device 1 carries out Steps s1-s5 described above. If the displacement value calculated in Step s5 is judged to be within the allowable range, the apparent irradiation direction in the horizontal direction is corrected by software based on this displacement value and the slope in the horizontal direction stored in the memory 2a such that the apparent horizontal direction comes to match the real horizontal direction. Parameters for this displacement for the adjustment are also stored in the memory 2a (Step s23). Next, the radar device 1 carries out Steps s7-s10 described above. If the displacement value calculated in Step s10 is judged to be within the allowable range, the apparent vertical direction is corrected by software based on this displacement value and the slope in the vertical direction stored in the memory 2a such that the apparent vertical direction comes to match the real vertical direction. Parameters for thus displacing for the adjustment are also stored in the memory 2a (Step s24). In summary, the irradiation axis is adjusted by taking into consideration the slopes of the flat plate 20 both in the horizontal and vertical directions, and hence the apparent direction can be corrected with a high level of accuracy.

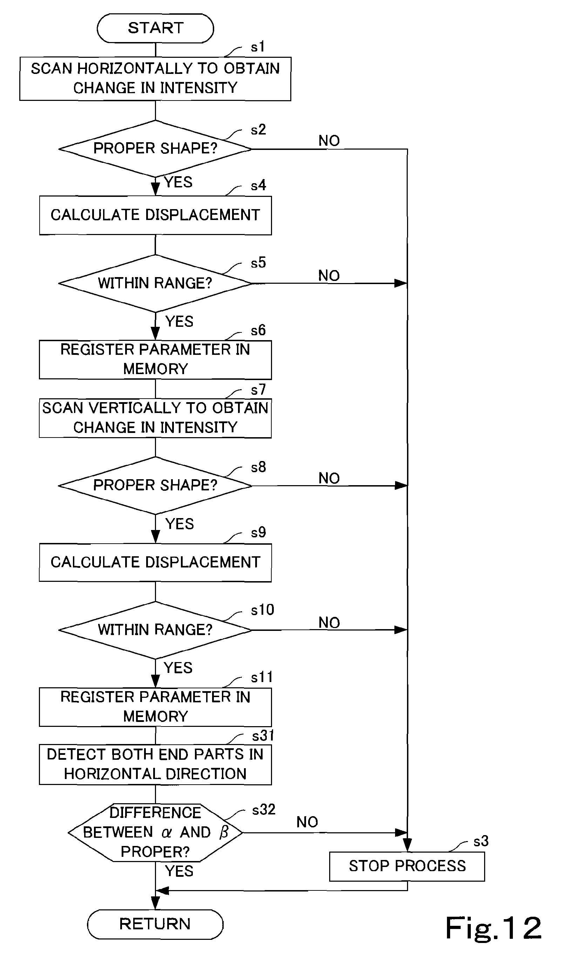

The radar device 1 itself may detect the slopes of the flat plate 20 in the horizontal and vertical directions. Fig. 12 is a flowchart for such a process. The radar device 1 carries out Steps s1-s11 shown in Fig. 7 and thereafter uses the parameters registered in the memory 2a in Step s6 to detect the positions of two horizontally arranged corner points of the flat plate 20 (Step s31), as shown in Fig. 13. If the flat plate 20 is positioned correctly, the irradiation angles $\alpha$ and $\beta$ when the corner points on the right-hand side and the left-hand side are detected should approximately match because the flat plate 20 is symmetric in the right-left direction with respect to the vehicle 10.

The radar device 1 judges whether or not the difference between $\alpha$ and $\beta$ is within a predetermined range (Step s32) in order to determine whether or not the flat plate 20 is positioned correctly for the adjustment of the irradiation axis. If the difference between $\alpha$ and $\beta$ is judged not to be within the predetermined range (NO in Step s32), the adjustment process is stopped (Step s3). If the difference between $\alpha$ and $\beta$ is judged to be within the predetermined range (YES in Step s32), it is concluded that the adjustment process is being carried out normally. This method is advantageous since the radar device 1 as a single unit can determine whether the flat plate 20 is positioned correctly or not.

Even if the radar device 1 is not facing the center of the flat plate 20, the angles $\alpha$ and $\beta$ are known quantities because the horizontal positional relationship between the flat plate 20 and the radar device 1 is fixed. The process may be designed such that the known values of the angles $\alpha$ and $\beta$ are compared with the measured values after the adjustment.

Although the invention has been described above in terms of a limited number of examples, these examples are not intended to limit the scope of the invention. Many modifications and variations are possible within the scope of the invention and such modifications and variations that may be apparent to a person skilled in the art are intended to be within the scope of the invention.

For example, this invention is applicable not only to radar devices using laser light as search wave but also to devices using other kinds of electromagnetic waves such as millimeter waves. Although a mechanism of moving laser light by moving a lens has been described, use may be made of a polygonal mirror or the like to move the laser light. The program for the adjustment of the irradiation axis may be supplied through the external I/F 8 when the adjustment is carried out. The flat plate 20 described above may be substituted by any structure with certain thickness or a thin sheet-like structure.

**Claims**

1.    An object detector comprising:

wave projecting means for projecting search wave;
wave receiving means for receiving reflected wave of said search wave from an object;
scanning means for moving said search wave projected by said wave projecting means in a selected direction;
position detecting means for detecting position of said object from time interval from when said search wave is projected by said wave projecting means until when said reflected wave is received by said wave receiving means and apparent irradiation direction of said search wave determined by said scanning means;

measuring means for using an adjustment member having a flat surface facing said wave projecting means, scanning said flat surface in said selected direction with said search wave by said scanning means and thereby obtaining a change in intensity of the reflected wave in said selected direction by said wave receiving means; and

adjusting means for adjusting the apparent irradiation direction of said search wave in said selected direction to the real irradiation direction of the search wave from said wave projecting means based on said change in intensity obtained by said measuring means.

2. The object detector of claim 1 wherein said scanning means also moves said search wave in another direction that is perpendicular to said selected direction;

wherein said measuring means also scans said flat surface in said another direction with said search wave by said scanning means and obtains a change in intensity of the reflected wave in said another direction by said wave receiving means; and

wherein said adjusting means also adjusts apparent irradiation direction of said search wave in said another direction to said object detector to the real irradiation direction of the search wave from said wave projecting means based on said change in intensity obtained by said measuring means.

3. The object detector of claim 1 wherein said adjusting means adjusts the irradiation direction by using a predetermined offset angle.

4. The object detector of claim 2 wherein said adjusting means adjusts the irradiation direction by using a predetermined offset angle.

5. The object detector of claim 1 wherein said adjustment member is provided with displacement detecting means for detecting a displacement value between actual position of said adjustment member and a proper position of said adjustment member; and

wherein said adjusting means adjusts the irradiation direction by using said displacement value.

6. The object detector of claim 2 wherein said adjustment member is provided with displacement detecting means for detecting a displacement value between actual position of said adjustment member and a proper position of said adjustment member; and

wherein said adjusting means adjusts the irradiation direction by using said displacement value.

7. The object detector of claim 3 wherein said adjustment member is provided with displacement detecting means for detecting a displacement value between actual position of said adjustment member and a proper position of said adjustment member; and

wherein said adjusting means adjusts the irradiation direction by using said displacement value.

8. The object detector of claim 4 wherein said adjustment member is provided with displacement detecting means for detecting a displacement value between actual position of said adjustment member and a proper position of said adjustment member; and

wherein said adjusting means adjusts the irradiation direction by using said displacement value.

9. The object detector of claim 5 further comprising adjustment stopping means for stopping adjustment of said irradiation direction if said displacement value exceeds a predetermined range.

10. The object detector of claim 6 further comprising adjustment stopping means for stopping adjustment of said irradiation direction if said displacement value exceeds a predetermined range.

11. The object detector of claim 7 further comprising adjustment stopping means for stopping adjustment of said irradiation direction if said displacement value exceeds a predetermined range.

12. The object detector of claim 8 further comprising adjustment stopping means for stopping adjustment of said irradiation direction if said displacement value exceeds a predetermined range.

13. The object detector of claim 1 further comprising adjustment stopping means for stopping adjustment of said irradiation direction if said position detecting means detects end positions of said adjustment members in said selected direction and if displacement values of said end positions from predetermined end positions of said adjustment members exceed a predetermined range.

14. The object detector of claim 2 further comprising adjustment stopping means for stopping adjustment of said irradiation direction if said position detecting means detects end positions of said adjustment members in said selected direction and if displacement values of said end positions from predetermined end positions of said adjustment members exceed a predetermined range.

**15.** The object detector of claim 3 further comprising adjustment stopping means for stopping adjustment of said irradiation direction if said position detecting means detects end positions of said adjustment members in said selected direction and if displacement values of said end positions from predetermined end positions of said adjustment members exceed a predetermined range.

**16.** The object detector of claim 4 further comprising adjustment stopping means for stopping adjustment of said irradiation direction if said position detecting means detects end positions of said adjustment members in said selected direction and if displacement values of said end positions from predetermined end positions of said adjustment members exceed a predetermined range.

**17.** A method of adjusting irradiation axis of an object detector, said object detector comprising:

wave projecting means for projecting search wave along said irradiation axis;
wave receiving means for receiving reflected wave of said search wave from an object;
scanning means for moving said search wave projected by said wave projecting means in a selected direction;
position detecting means for detecting position of said object from time interval from when said search wave is projected by said wave projecting means until when said reflected wave is received by said wave receiving means and apparent irradiation direction of said search wave determined by said scanning mean; and
control means;
said method comprising the steps of:

providing an adjustment member having a flat surface; and
causing said control means to carry out a process including:

a measuring step for scanning said flat surface with said search wave in a specified direction on said flat surface and obtaining a change in intensity of the reflected wave in said specified direction by said wave receiving means; and
an adjusting step for adjusting the apparent irradiation direction in said selected direction to the real irradiation direction of the search wave from said wave projection means based on said change in intensity obtained in said measuring step.

Fig. 1

EP 1 972 960 A1

11

HORIZONTAL
SCAN RANGE

9

10

Fig. 2

Fig. 3

Fig. 4

HORIZONTAL SCAN
ADJUSTMENT RANGE

OPTICAL
AXIS

20

9

10

## Fig. 5

10

VERTICAL SCAN
ADJUSTMENT RANGE

20

9

## Fig. 6

```
                    ┌─────────────┐
                    │    START    │
                    └─────────────┘
                           │
                           │        ⌒ s1
              ┌────────────────────────────┐
              │  SCAN HORIZONTALLY TO OBTAIN │
              │     CHANGE IN INTENSITY      │
              └────────────────────────────┘
                           │
                           │           ⌒ s2         NO
                    ◇───────────────◇──────────────────────┐
                    │  PROPER SHAPE? │                       │
                    ◇───────────────◇                       │
                           │ YES                             │
                           │         ⌒ s4                    │
              ┌────────────────────────────┐                 │
              │    CALCULATE DISPLACEMENT   │                 │
              └────────────────────────────┘                 │
                           │                                 │
                           │        ⌒ s5          NO         │
                    ◇───────────────◇────────────────────►  │
                    │  WITHIN RANGE? │                       │
                    ◇───────────────◇                       │
                           │ YES                             │
                           │        ⌒ s6                     │
              ┌────────────────────────────┐                 │
              │    REGISTER PARAMETER IN     │                 │
              │          MEMORY              │                 │
              └────────────────────────────┘                 │
                           │        ⌒ s7                     │
              ┌────────────────────────────┐                 │
              │  SCAN VERTICALLY TO OBTAIN   │                 │
              │     CHANGE IN INTENSITY      │                 │
              └────────────────────────────┘                 │
                           │                                 │
                           │           ⌒ s8         NO       │
                    ◇───────────────◇────────────────────►  │
                    │  PROPER SHAPE? │                       │
                    ◇───────────────◇                       │
                           │ YES                             │
                           │        ⌒ s9                     │
              ┌────────────────────────────┐                 │
              │    CALCULATE DISPLACEMENT   │                 │
              └────────────────────────────┘                 │
                           │                                 │
                           │        ⌒ s10         NO         │
                    ◇───────────────◇────────────────────►  │
                    │  WITHIN RANGE? │                       │
                    ◇───────────────◇                       │
                           │ YES                             ▼
                           │      ⌒ s11              ⌒ s3
              ┌────────────────────────────┐   ┌──────────────────┐
              │    REGISTER PARAMETER IN     │   │   STOP PROCESS   │
              │          MEMORY              │   └──────────────────┘
              └────────────────────────────┘            │
                           │◄──────────────────────────────┘
                    ┌─────────────┐
                    │   RETURN    │
                    └─────────────┘
```

## Fig. 7

INTENSITY

APPARENT DIRECTION

Fig. 8

β    α

9

20

10

Fig. 13

21

DISPLACEMENT
DETECTOR

SLOPE IN
HORIZONTAL
DIRECTION

20

HORIZONTAL
SCAN ADJUSTMENT
RANGE

9

10

Fig. 9

SLOPE IN VERTICAL
DIRECTION

20

VERTICAL SCAN
ADJUSTMENT
RANGE

10

9

21

DISPLACEMENT
DETECTOR

Fig. 10

Fig. 11

START

s1
SCAN HORIZONTALLY TO OBTAIN
CHANGE IN INTENSITY

s2
PROPER SHAPE? —— NO

YES  s4
CALCULATE DISPLACEMENT

s5
WITHIN RANGE? —— NO

YES  s6
REGISTER PARAMETER IN
MEMORY

s7
SCAN VERTICALLY TO OBTAIN
CHANGE IN INTENSITY

s8
PROPER SHAPE? —— NO

YES  s9
CALCULATE DISPLACEMENT

s10
WITHIN RANGE? —— NO

YES  s11
REGISTER PARAMETER IN
MEMORY

s31
DETECT BOTH END PARTS IN
HORIZONTAL DIRECTION

s32
DIFFERENCE
BETWEEN $\alpha$ AND $\beta$ —— NO
PROPER?

YES

s3
STOP PROCESS

RETURN

Fig.12

| European Patent Office | EUROPEAN SEARCH REPORT | Application Number EP 07 11 9911 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/065814 A1 (MIYAZAKI HIDENORI [JP] ET AL) 8 April 2004 (2004-04-08) * paragraphs [0030], [0031], [0033], [0034]; figure 2 * | 1-8 | INV. G01S7/40 G01S7/497 G01S17/42 G01S17/93 |
| Y | WO 03/076963 A (AUTOMOTIVE DISTANCE CONTROL SY [DE]; LEICHTE WALTER [DE]) 18 September 2003 (2003-09-18) * page 7, line 30 - page 8, line 3; figures 1-3 * * page 8, lines 29-32 * * page 5, lines 20,21 * * page 6, line 13 - line 16 * * page 10, paragraph 9-15 * | 1-8 | |
| A | EP 1 118 494 A (BAYERISCHE MOTOREN WERKE AG [DE]) 25 July 2001 (2001-07-25) * paragraphs [0006], [0012]; figure 1 * | 1-17 | |
| A | EP 0 984 297 A (BOSCH GMBH ROBERT [DE]) 8 March 2000 (2000-03-08) * paragraph [0002]; figure 1 * | 1-17 | TECHNICAL FIELDS SEARCHED (IPC) G01S |
| A | EP 1 731 924 A (OMRON TATEISI ELECTRONICS CO [JP]) 13 December 2006 (2006-12-13) * figures 5,10 * | 1-17 | |
| A | WO 01/11387 A (BAYERISCHE MOTOREN WERKE AG [DE]; BAUER GUENTER [DE]; SAUER THOMAS [DE] 15 February 2001 (2001-02-15) * page 3 - page 4 * | 1-17 | |
| A | EP 1 001 274 A (MANNESMANN VDO AG [DE] SIEMENS AG [DE]) 17 May 2000 (2000-05-17) * paragraphs [0006] - [0010] * | 1-17 | |

-/--

The present search report has been drawn up for all claims

| Place of search | Date of completion of the search | Examiner |
|---|---|---|
| Munich | 27 February 2008 | Metz, Carsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

**EUROPEAN SEARCH REPORT**

Application Number

EP 07 11 9911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 437 731 B1 (HENRIO JEAN-FRANCOIS [FR] ET AL) 20 August 2002 (2002-08-20) * column 4, line 33 - column 5, line 4; figures 1,2 * ----- | 1-17 | |
| | | | **TECHNICAL FIELDS SEARCHED (IPC)** |

The present search report has been drawn up for all claims

| Place of search | Date of completion of the search | Examiner |
|---|---|---|
| Munich | 27 February 2008 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 9911

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2008

| Patent document cited in search report | | | Publication date | Patent family member(s) | | | Publication date |
|---|---|---|---|---|---|---|---|
| US 2004065814 | A1 | | 08-04-2004 | JP | 2004125739 | A | 22-04-2004 |
| WO 03076963 | A | | 18-09-2003 | DE | 10210472 | A1 | 25-09-2003 |
| EP 1118494 | A | | 25-07-2001 | DE | 10001783 | C1 | 20-09-2001 |
| | | | | US | 2001008446 | A1 | 19-07-2001 |
| EP 0984297 | A | | 08-03-2000 | DE | 19840307 | A1 | 16-03-2000 |
| EP 1731924 | A | | 13-12-2006 | CN | 1877362 | A | 13-12-2006 |
| | | | | JP | 2006337295 | A | 14-12-2006 |
| | | | | US | 2006274299 | A1 | 07-12-2006 |
| WO 0111387 | A | | 15-02-2001 | DE | 19936609 | A1 | 15-03-2001 |
| | | | | EP | 1198723 | A1 | 24-04-2002 |
| | | | | ES | 2226902 | T3 | 01-04-2005 |
| | | | | JP | 2003506722 | T | 18-02-2003 |
| | | | | US | 6636172 | B1 | 21-10-2003 |
| EP 1001274 | A | | 17-05-2000 | DE | 19852101 | A1 | 31-05-2000 |
| | | | | US | 6418775 | B1 | 16-07-2002 |
| US 6437731 | B1 | | 20-08-2002 | AT | 233908 | T | 15-03-2003 |
| | | | | DE | 60001528 | D1 | 10-04-2003 |
| | | | | DE | 60001528 | T2 | 26-02-2004 |
| | | | | EP | 1083442 | A1 | 14-03-2001 |
| | | | | ES | 2193040 | T3 | 01-11-2003 |
| | | | | FR | 2798196 | A1 | 09-03-2001 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000075031 A
- JP 2003014846 A
- JP 11038123 A